# FASCICULE DE BREVET EUROPEEN

(11) **EP 2 911 933 B1**
(45) Date de publication et mention de la délivrance du brevet: **14.02.2018**
(21) Numéro de dépôt: 13815014.9
(22) Date de dépôt: 25.10.2013
(51) Int. Cl.: B62D 25/10, B62D 25/16

(54) **SUPPORT D'AILE D'UN VÉHICULE AUTOMOBILE**
KOTFLÜGELHALTERUNG FÜR EIN KRAFTFAHRZEUG
FENDER BRACKET OF A MOTOR VEHICLE

(30) Priorité: 26.10.2012 FR 1260270
(43) Date de publication de la demande: 02.09.2015
(73) Titulaire: Compagnie Plastic Omnium, 69007 Lyon (FR)
(72) Inventeur: BOKSEBELD, Marcel, F-38150 Anjou (FR); MARTIN, Laurent, F-07340 Peaugres (FR)
(74) Mandataire: Remy, Vincent Noel Paul
(86) Numéro de dépôt international: PCT/FR2013/052550
(87) Numéro de publication internationale: WO 2014/064394

(56) Documents cités:
- EP-A1- 2 657 108
- DE-A1-102009 058 127
- US-A1- 2004 108 753

## Description

La présente invention concerne un support d'aile de véhicule automobile.

L'invention s'intéresse plus particulièrement à une zone du support d'aile permettant d'y fixer la charnière du capot.

Habituellement, la charnière de capot est attachée par un moyen de fixation à un élément de structure du véhicule tel que le châssis ou les longerons. Dans l'état de la technique, lorsqu'un support d'aile est utilisé, celui-ci est généralement fixé à la structure du véhicule de manière indépendante de la charnière du capot. Ce mode de montage est relativement difficile en raison notamment d'opérations de calage des éléments de carrosserie qui nécessitent l'emploi de gabarits. En outre, la complexité géométrique de la carrosserie oblige à passer par des étapes de réglages successives des jeux et de l'affleurement entre le capot, les ailes et la structure du véhicule.

Pour tenter de résoudre ces difficultés, le brevet FR 2 917 769 propose un support d'aile qui est fixé sur la charnière de capot du véhicule qui est elle-même fixée sur un élément de structure du véhicule. Ceci améliore le positionnement et les opérations de fixation des éléments de carrosserie mais ne propose pas une solution satisfaisante pour le réglage des jeux entre le capot et l'aile. En effet, la charnière du capot est fixée par rapport à la structure du véhicule, également désignée ossature, alors que la partie haute de l'aile, dont le bord doit venir affleurer avec le bord du capot, est fixée sur le support d'aile. Ces différences de points de fixation oblige à faire encore de nombreux réglages et étapes d'indexation afin de pouvoir assurer le positionnement correct des éléments de carrosserie les uns par rapport aux autres.

La demande de brevet allemande DE 102009058127 (A1) divulgue un support d'aile comportant deux éléments de support qui sont assemblés ensemble et sont fabriqués, pour l'un en alliage léger et pour l'autre à partir d'un matériau ferreux, ledit support d'aile permettant d'attacher notamment une charnière de capot et une aile de carrosserie.

Le but de la présente invention est de résoudre les problèmes évoqués plus haut en proposant une charnière de capot qui est fixée comme la partie haute de l'aile, c'est-à-dire au support d'aile uniquement. Ainsi, seul le support d'aile sert de référentiel pour le réglage des jeux et affleurements des éléments de carrosserie. Ce but est atteint grâce à un support d'aile de véhicule automobile qui comprend des portées de fixation d'une aile, un point d'ancrage avec un élément de structure du véhicule et une zone de fixation d'une charnière de capot, caractérisé en ce que la zone de fixation de charnière est éloignée du point d'ancrage et en ce que les portées de fixation et la zone de fixation sont conformées pour assurer un positionnement relatif prédéterminé entre l'aile et le capot.

Avantageusement, le support d'aile est réalisé dans un matériau polymère et de préférence dans un matériau polymère thermodurcissable de type AMC ou BMC.

Ainsi la charnière de capot et l'aile sont fixés tous les deux directement sur le support d'aile, ce qui leur permet d'avoir le même référentiel et assure un réglage simple et de haute précision des jeux et de l'affleurement entre ces deux pièces de carrosserie.

De préférence, la distance entre la zone de fixation de la charnière et le point d'ancrage est supérieure à 50 mm, encore préférentiellement à 10 mm. Selon l'invention, le support d'aile est apte à recevoir un renfort comprenant une première surface d'attache capable de se solidariser par un moyen de fixation à la zone de fixation de la charnière et une seconde surface d'attache capable de se solidariser par un moyen de fixation à un élément de structure du véhicule et une liaison entre les deux surfaces d'attache capable de résister à une force de comprise entre 4000N et 8000 N.

Ce renfort permet ainsi de donner une grande robustesse à la fixation de la charnière capot, ce qui s'avère indispensable en cas de collision du véhicule. La sécurité des passagers par rapport à un éventuel arrachement du capot de la structure est donc garantie grâce à ce renfort.

Dans un mode de réalisation de l'invention, le renfort est conformé pour que :
- la première surface d'attache du renfort coïncide avec le point d'ancrage du support d'aile,
- la seconde surface d'attache du renfort coïncide avec la zone de fixation de charnière,
de sorte qu'après fixation, la charnière de capot est maintenue solidaire de l'élément de structure du véhicule par le renfort.

Ainsi, le renfort crée une liaison de grande résistance entre la zone de fixation de charnière et un élément de structure, ce qui permet de fixer la charnière à la zone de fixation prévue à cet effet sur le support d'aile. Selon l'invention, la liaison est conformée en un plan incliné par rapport aux surfaces d'attache.

Avantageusement, cette conformation en plan incliné facilite le réglage en hauteur (selon la direction Z) des éléments de carrosserie les uns par rapport aux autres.

Dans un autre mode de réalisation de l'invention, le renfort est fabriqué dans un matériau métallique. Ceci garantit une résistance accrue du renfort du support d'aile.

Dans un autre mode de réalisation, le renfort a une épaisseur moyenne généralement comprise entre 0,7et 3 mm.

Avantageusement le choix de l'épaisseur du renfort permet d'adapter la résistance en fonction des caractéristiques du véhicule et du niveau de sécurité recherché.

Dans un mode de réalisation particulier de l'invention, le support comporte des ergots de positionnement du renfort. Cela permet de positionner le renfort facilement sur le support d'aile et de ne plus avoir à le tenir lors de l'assemblage du support d'aile sur la structure du véhicule.

L'invention concerne également un procédé de fixation d'une charnière de capot sur un élément de structure d'un véhicule automobile, comportant les étapes suivantes :
- fixation d'un support d'aile de véhicule automobile selon l'une des revendications précédentes sur l'élément de structure,
- fixation de la charnière de capot sur le support d'aile.

L'invention sera mieux comprise à la lecture de la description qui va suivre, donnée uniquement à titre d'exemple et faite en se référant aux dessins annexés dans lesquels :
- la figure 1 est une vue en perspective d'un support d'aile selon un mode de réalisation, portant une aile et une charnière de capot, et assemblé sur un élément de carrosserie ;
- la figure 2 est une vue rapprochée de la figure 1 ;
- la figure 3 est une vue partielle en perspective de dessous du support d'aile avec son renfort ;
- la figure 4 est une vue en perspective du renfort de la figure 3 ;
- la figure 5 est une vue en coupe selon V-V de la figure 2 ;
- la figue 6 est une vue en coupe selon VI-VI de la figure 1 une fois le support d'aile assemblé.

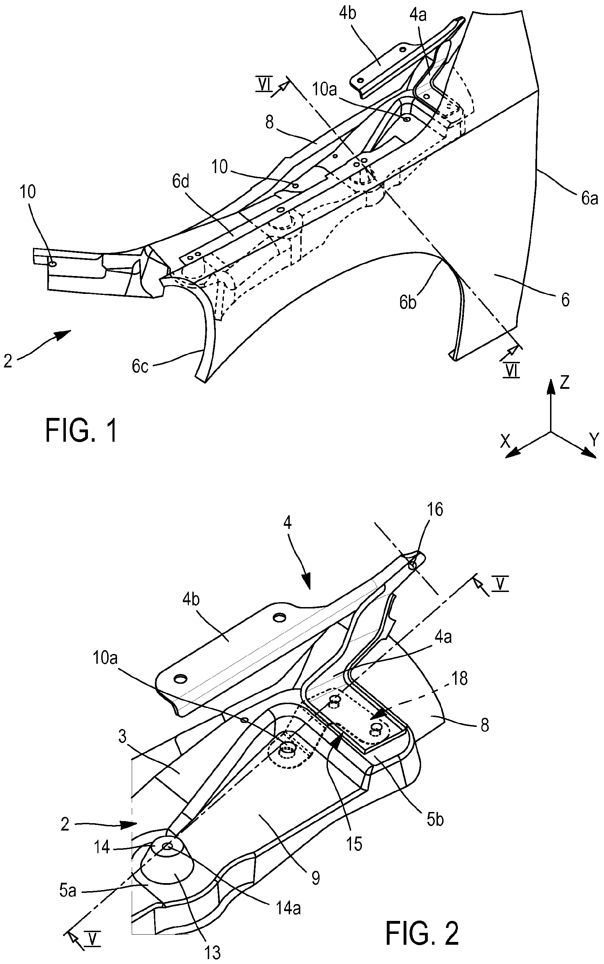

En référence aux figures 1 et 2, un support d'aile 2 porte une charnière de capot 4 et une aile 6. Le support d'aile 2, qui a une forme en volume globalement allongée dans le sens longitudinal du véhicule est constitué à partir d'une feuille de matière plastique, dont l'épaisseur moyenne est de 3 mm. Il n'est pas indispensable, selon l'invention, que la matière soit apportée sous forme de feuille. Des technologies telles que, le moulage de polymères thermodurcissables par compression, notamment AMC et BMC (voir plus loin) en particulier seraient appropriées. Le support d'aile 2 est fixé sur un élément de structure 8 (ou ossature) du véhicule, quelquefois appelé longeron supérieur 8 (et ainsi désigné dans la suite de la description). Ce longeron supérieur 8 a une forme sensiblement allongée qui définit celle du support d'aile 2. Il s'étend latéralement à l'avant du véhicule et il constitue la partie la plus rigide de la partie supérieure latérale avant du véhicule, située au dessus de la roue.

Pour permettre la fixation du support d'aile 2 sur le longeron 8, le support d'aile 2 est pourvu de trois trous (10, 10a) traversants, répartis longitudinalement sur le support d'aile 2, lesquels trous (10, 10a) sont aptes à recevoir des moyens de fixation (non représentés) tels que des vis. Le support d'aile 2 présente deux niveaux, un premier niveau 5a qui s'étend depuis l'avant jusqu'à une partie centrale du support d'aile 2 et un second niveau 5b qui s'étend à l'arrière, c'est-à-dire dans la partie la plus proche de l'habitacle du véhicule. Les deux niveaux sont reliés l'un à l'autre par un plan incliné 3.
La surface supérieure du support d'aile 2 forme un renfoncement 9 qui est allongé dans le sens du support d'aile et qui prolonge le premier niveau 5a vers l'arrière. Ce renfoncement 9 fait saillie vers le dessous du support d'aile 2 et contribue à rigidifier la partie arrière du support d'aile 2.

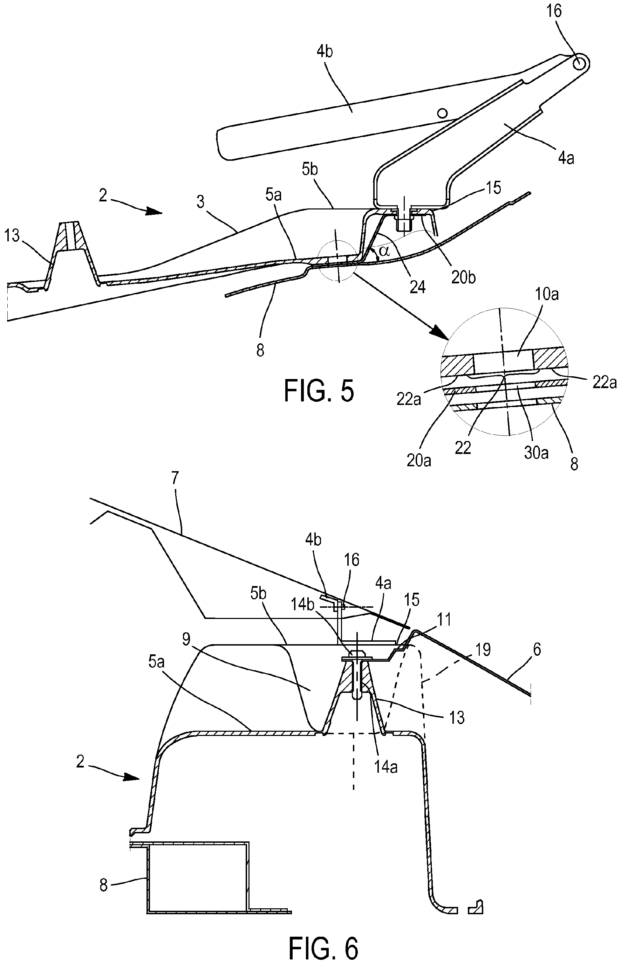

Sur la vue en coupe de la figure 5, on voit que ce renfoncement 9 définit une zone d'ancrage 22 qui est constituée par des zones de contact 22a et par un trou 10a. Lorsque le support d'aile 2 est monté, le trou 10a coïncide avec un trou du longeron 8 de l'ossature du véhicule. Sur le dessus de la partie arrière du support d'aile se trouve une zone de fixation 15 de la charnière de capot 4.

L'aile 6, qui est reçue dans sa partie supérieure par le support d'aile 2, a un profil de forme adaptée pour masquer la partie latérale avant du véhicule. Pour sa fixation sur le support d'aile 2, elle possède un bord arrière 6a qui vient affleurer avec un bord avant d'une portière avant du véhicule (non représentée), un bord inférieur 6b en arc de cercle destiné à border le passage de roue et un bord avant 6c. L'aile 6 comporte enfin un bord supérieur 6d qui affleure avec le bord latéral d'un capot 7 de manière à laisser un jeu aussi précis et contrôlé que possible. Vers l'arrière, c'est-à-dire à proximité de l'habitacle ou du pare-brise, le bord supérieur 6d remonte pour rejoindre la base du montant de baie du véhicule.

En référence à la figure 6, on voit que le profil du haut de l'aile 6 forme un bord tombé 11 qui s'étend dans le sens longitudinal du support d'aile 2. Ce bord tombé vient en appui sur des pontets 13 faisant corps avec le support d'aile 2.

Les pontets 13 ont une forme sensiblement conique (mais ils pourraient avoir d'autres formes, notamment rectangulaire, cylindrique, cubique...) et la surface de chacun de leurs sommets forme une portée 14 possédant au moins un trou 14a apte à recevoir une vis 14b qui permet la fixation de l'aile 6 sur le support d'aile 2. Ces pontets 13 sont des absorbeurs de choc et leur rôle est d'amortir le choc de la tête d'un piéton qui serait renversé sur le capot 7 ou l'aile 6 du véhicule. Les portées 14 peuvent aussi être délimitées directement sur des surfaces du support d'aile 2, dans le cas, par exemple, où le véhicule ne comporterait pas de pontets 13.

La charnière de capot 4 est en deux parties, à savoir une première partie fixe appelée charnon fixe 4a, qui est attachée à la zone de fixation 15 du support d'aile 2 et une deuxième partie appelée charnon mobile 4b qui est mobile et sur laquelle peut être fixé le capot 7. Ainsi, tout comme l'aile 6, la charnière de capot 4 est directement attachée au support d'aile 2 au niveau de la zone de contact 15. Le charnon mobile 4b et le charnon fixe 4a sont des éléments mobiles l'un par rapport à l'autre grâce à un axe 16 qui permet une rotation selon la direction transversale Y pour l'ouverture du capot 7. Ainsi, grâce à un référencement unique par rapport au support d'aile 2 et au fait que la charnière 4 n'est pas fixée directement au longeron 8, on obtient un positionnement relatif précis de ces éléments de carrosserie les uns par rapport aux autres. Autrement dit, le support d'aile 2 est agencé pour assurer un positionnement relatif prédéterminé entre les portées 14 de fixation et la zone 15 de fixation.

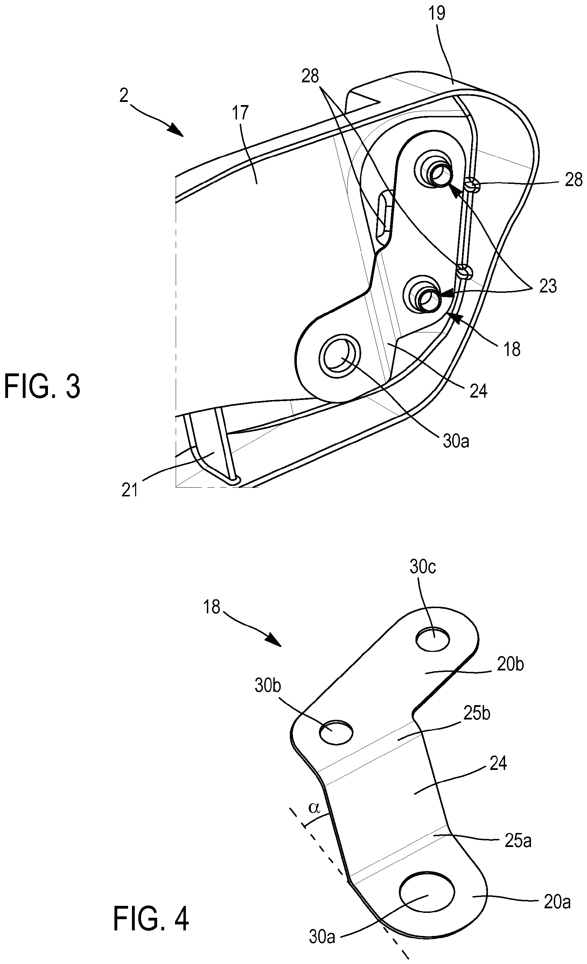

Sur la figure 3, on voit le dessous du support d'aile 2 dans la région du trou 10a. Le support d'aile 2 comporte un bord périphérique 19 qui délimite un creux 17 dans lequel est logé un renfort 18. Dans le creux 17, le support d'aile 2 comporte des moyens de positionnement sous forme d'ergots 28 qui sont situés sur le pourtour du renfort 18 sur le support d'aile 2. Ainsi, les ergots 28 permettent un pré-positionnement du renfort 18 sur le support d'aile 2. A l'intérieur du creux 17, le renfoncement 9 comporte une nervure transversale 21 qui se situe de part et d'autre du renfoncement 9 et s'étend jusqu'au rebord 19 du support d'aile 2. Ce dernier se trouve ainsi rigidifié par la nervure 21, par le renfoncement 9 et par le rebord 19 qui délimite son pourtour.

En référence à la figure 4, le renfort 18 a l'aspect d'une courte bande métallique dont le profil est proche de celui d'un T. Le renfort comporte deux pliages (25a, 25b), lesquels pliages définissent le début de deux surfaces planes d'attache (20a, 20b) qui sont reliées par une liaison 24. Elles viennent en appui respectivement sur le dessous du renfoncement 9 et sur le dessous de la partie arrière du support d'aile 2. Chacune des surfaces d'attache (20a, 20b) comporte un ou plusieurs trous (30a, 30b, 30c) qui sont aptes à recevoir des moyens de fixation de type vis/écrous 23, comme représenté sur la figure 3.

Pour ce qui concerne la liaison 24, celle-ci forme un angle α avec le longeron sur lequel le renfort 18 est positionné. La valeur de cet angle α est de préférence comprise entre 0° et 80°, ce qui permet d'obtenir une élasticité adéquate pour le montage du support d'aile 2 qui impose sa géométrie et sa rigidité au renfort 18 au moment du serrage des moyens de fixation 23. Le renfort 18 est idéalement fabriqué en métal, ce qui permet, grâce à une continuité électrique entre le capot et la structure, de pouvoir appliquer une peinture par voie électrostatique. La liaison 24 qui relie les deux surfaces d'attache (20a, 20b) a une résistance de comprise entre 4000N et 8000N. De cette manière, la charnière de capot 4 se trouve liée par l'intermédiaire des moyens de fixation 23 et du renfort 18 à une des parties structurales les plus rigides de l'avant du véhicule, c'est-à-dire le longeron 8. Ceci garantit une sécurité optimale pour les passagers par rapport à un risque éventuel d'arrachement du capot 7 du véhicule en cas de collision.

La partie agrandie de la figure 5 montre la première surface d'attache 20a en appui contre la zone d'ancrage 22 du support d'aile 2 qui est destinée à être fixé sur le longeron 8 du véhicule.

Sur la figure 5, on voit aussi la deuxième surface d'attache 20b qui est en appui contre la face inférieure du support d'aile 2, au droit de la face supérieure du support d'aile 2, elle même constituant la zone de fixation 15 de la charnière 4. Un jeu de vis et d'écrous 23 traverse les trous (30b, 30c) du renfort 18 et assure la solidarité entre la surface 20b, la zone de fixation 15 du charnon fixe 4a et la charnière de capot 4. Dans le mode de réalisation décrit, la zone d'ancrage 22 comprend une surface de contact 22a et un trou 10a apte à recevoir un couple vis/écrou (non représenté).

La zone d'ancrage 22 permet le positionnement du support d'aile 2 par rapport à la structure 8 du véhicule au moyen d'un jeu de vis et d'écrous (non représenté) reçu dans le trou traversant 30a du renfort 18. Comme la zone de fixation 15 de la charnière 4 se trouve à l'arrière du support d'aile 2 sur le second niveau, celle-ci se trouve à une distance éloignée de la zone d'ancrage 22 du support d'aile 2. Dans le cadre de l'invention, l'éloignement doit être au moins supérieur à 10 mm, et de préférence inférieur à 100 mm, et de préférence encore inférieur à 150 mm. Ainsi, ces plages de valeurs d'éloignement correspondes avantageusement à la plupart des véhicules actuels.
Le support d'aile 2 est généralement réalisé par injection dans un matériau polymère qui peut être un thermodurcissable de type AMC ou BMC, qui sont des acronymes de « Avanced Molding Compound » et « Bulk Molding Compound ». La charnière du capot 7 est généralement réalisée dans une tôle métallique relativement épaisse de façon à pouvoir maintenir le capot 7 et résister en cas de choc.

Un procédé de montage permet de fixer le charnon mobile 4b et le haut de l'aile 6 sur le support d'aile 2, leur permettant ainsi d'avoir la même référence. Dans une première étape, le support d'aile 2 sur lequel est monté le renfort 18, est fixé à la structure du véhicule, notamment au niveau de la zone d'ancrage 22, en étant positionné par rapport aux directions longitudinale X et transversale Y du véhicule. Ensuite, la charnière de capot 4 est fixée par des moyens de fixation au niveau de la zone de fixation 15 et l'aile 6 est fixée au support d'aile 2 au niveau des pontets 13 par des vis qui traversent les trous 11, de telle sorte que les vis sont serrées contre les portées 14 qui sont sur les pontets 13. Ainsi, le support d'aile 2 impose la rigidité de sa géométrie au renfort 18 qui, par son élasticité, améliore considérablement le réglage des jeux et affleurements entre le capot 7 et l'aile 6.

Divers aménagements et variantes au support d'aile 2 décrits ci-dessus sont par ailleurs envisageables. A titre d'exemple, la forme et la disposition des zones de fixation de la charnière 4 sur le support d'aile 2 peuvent être modifiées, en particulier en fonction de la géométrie du véhicule, notamment de ses éléments de structure

## Revendications

1. Support d'aile (2) de véhicule automobile qui comprend des portées (14) de fixation d'une aile (6), un point d'ancrage (22) avec un élément de structure (8) du véhicule et une zone de fixation (15) d'une charnière (4) de capot (7), le support d'aile (2) comprenant un renfort (18) qui comporte une première surface d'attache (20a) capable de se solidariser par un moyen de fixation à la zone de fixation (15) de la charnière et une seconde surface d'attache (20b) capable de se solidariser par un moyen de fixation à un élément de structure (8) du véhicule, **caractérisé en ce que** le support d'aile (2) comprend une liaison (24) entre les deux surfaces d'attache (20a, 20b) capable de résister à une force comprise entre 4000N et 8000N, la liaison étant conformée en un plan incliné par rapport aux surfaces d'attache (20a, 20b), et **en ce que** la zone de fixation (15) de charnière (4) est éloignée du point d'ancrage (22) et le support d'aile est agencé pour assurer un positionnement relatif prédéterminé entre les portées de fixation (14) et la zone de fixation (15).

2. Support d'aile (2) selon la revendication 1 réalisé dans un matériau polymère et de préférence dans un matériau polymère thermodurcissable de type AMC ou BMC.

3. Support d'aile selon l'une quelconque des revendications précédentes, le renfort (18) étant conformé pour que :
- la première surface d'attache (20a) du renfort coïncide avec le point d'ancrage (22) du support d'aile,
- la seconde surface d'attache (20b) du renfort coïncide avec la zone de fixation (15) de charnière (4),
de sorte qu'après fixation, la charnière de capot (4) est maintenue solidaire de l'élément de structure (8) du véhicule par le renfort.

4. Support d'aile (2) suivant l'une quelconque des revendications précédentes, le renfort étant (18) fabriqué dans un matériau métallique.

5. Support d'aile (2) suivant l'une quelconque des revendications précédentes, le renfort (18) ayant une épaisseur moyenne comprise entre 0,7 et 3 mm.

6. Support d'aile (2) suivant l'une quelconque des revendications précédentes, le support comportant des ergots de positionnement (28) du renfort (18).

7. Procédé de fixation d'une charnière de capot (4) sur un élément de structure (8) d'un véhicule automobile, comportant les étapes suivantes :
- fixation d'un support d'aile (2) de véhicule automobile selon l'une des revendications précédentes sur l'élément de structure (8),
- fixation de la charnière de capot (4) sur le support d'aile (2).

## Patentansprüche

1. Kotflügelhalterung (2) für Kraftfahrzeug, das Auflageflächen (14) für die Befestigung eines Kotflügels (6), einen Punkt für die Verankerung (22) mit einem Strukturelement (8) des Fahrzeugs und eine Zone für die Befestigung (15) eines Scharniers (4) einer Motorhaube (7) umfasst, wobei die Kotflügelhalterung (2) eine Versteifung (18) umfasst, die eine erste Verbindungsfläche (20a), die in der Lage ist, durch ein Befestigungsmittel mit der Zone für die Befestigung (15) des Scharniers fest verbunden zu werden, und eine zweite Verbindungsfläche (20b), die in der Lage ist, durch ein Befestigungsmittel mit einem Strukturelement (8) des Fahrzeugs fest verbunden zu werden, umfasst, **dadurch gekennzeichnet, dass** die Kotflügelhalterung (2) eine Verbindung (24) zwischen den zwei Verbindungsflächen (20a, 20b) umfasst, die in der Lage ist, einer Kraft zwischen 4.000 N und 8.000 N standzuhalten, wobei die Verbindung in einer Ebene ausgebildet ist, die relativ zu den Verbindungsflächen (20a, 20b) geneigt ist, und dass die Zone für die Befestigung (15) des Scharniers (4) von dem Verankerungspunkt (22) entfernt ist und die Kotflügelhalterung vorgesehen ist, um eine vorbestimmte relative Positionierung zwischen den Befestigungsauflageflächen (14) und der Befestigungszone (15) sicherzustellen.

2. Kotflügelhalterung (2) nach Anspruch 1, realisiert aus einem Polymerwerkstoff und vorzugsweise aus einem duroplastischen Polymerwerkstoff des AMC- oder BMC-Typs.

3. Kotflügelhalterung einem der vorhergehenden Ansprüche, wobei die Versteifung (18) so ausgebildet ist, dass
- die erste Verbindungsfläche (20a) der Versteifung mit dem Verankerungspunkt (22) der Kotflügelhalterung zusammenfällt,
- die zweite Verbindungsfläche (20b) der Versteifung mit der Zone für die Befestigung (15) des Scharniers (4) zusammenfällt,
so dass, nach Befestigung, das Motorhaubenscharnier (4) durch die Versteifung mit dem Strukturelement (8) des Fahrzeugs fest verbunden gehalten wird.

4. Kotflügelhalterung (2) einem der vorhergehenden Ansprüche, die Versteifung (18) aus einem metallischen Werkstoff hergestellt ist.

5. Kotflügelhalterung (2) einem der vorhergehenden Ansprüche, die Versteifung (18) eine mittlere Dicke zwischen 0,7 und 3 mm hat.

6. Kotflügelhalterung (2) einem der vorhergehenden Ansprüche, wobei die Halterung Nasen für die Positionierung (28) der Versteifung (18) aufweist.

7. Verfahren zum Befestigen eines Motorhaubenscharniers (4) an einem Strukturelement (8) eines Kraftfahrzeugs, umfassend die folgenden Schritte:
- Befestigen einer Kotflügelhalterung (2) für Kraftfahrzeug nach einem der vorhergehenden Ansprüche an dem Strukturelement (8),
- Befestigen des Motorhaubenscharniers (4) an der Kotflügelhalterung (2).

## Claims

1. Fender bracket (2) of a motor vehicle, which includes seatings (14) for attaching a fender (6), a point (22) for anchoring with a structural element (8) of the vehicle, and an area (15) for attaching a hinge (4) of the bonnet (7), the fender bracket (2) comprising a reinforcement (18) comprising a first attachment surface (20a) designed so that it can be attached by fastening means to the hinge attachment area (15) and a second attachment surface (20b) designed so that it can be attached by fastening means to a structural element (8) of the vehicle, **characterized in that** the fender bracket (2) comprises a connection (24) between the two attachment surfaces (20a, 20b) capable of withstanding a force of between 4000 N and 8000 N, the connection (24) being conformed as a plane inclined relative to the attachment surfaces (20a, 20b), and **in that** the area (15) for attaching the hinge (4) is separated from the anchoring point (22) and the fender bracket is shaped so as to ensure a predetermined relative positioning between the attachment seatings (14) and the attachment area (15).

2. Fender bracket (2) according to claim 1 made of a polymer material and preferably of a thermosetting polymeric material of type AMC or BMC.

3. Fender bracket according to any one of the preceding claims, the reinforcement (18) being conformed so that:
- the first attachment surface (2a) of the reinforcement coincides with the anchoring point (22) of the fender bracket,
- the second attachment surface (20b) of the reinforcement coincides with the attachment area (15) of the hinge (4),
such that after attachment, the bonnet hinge (4) is held securely to the structural element (8) of the vehicle by the reinforcement.

4. Fender bracket (2) according to any one of the preceding claims, the reinforcement (18) being is made of a metallic material.

5. Fender bracket (2) according to any one of the preceding claims, the reinforcement (18) having a mean thickness of between 0.7 mm and 3 mm.

6. Fender bracket (2) according to any one of the preceding claims, the bracket comprising pins (28) for positioning the reinforcement (18).

7. Method for attaching a bonnet hinge to a structural element (8) of a motor vehicle, comprising the following steps:
- attachment of a fender bracket (2) of a motor vehicle according to one of the preceding claims on the structural element (8),
- attachment of the bonnet hinge (4) on the fender bracket (2).
